# EUROPÄISCHE PATENTSCHRIFT

(11) **EP 2 035 767 B1**
(45) Veröffentlichungstag und Bekanntmachung des Hinweises auf die Patenterteilung: **14.09.2011**
(21) Anmeldenummer: 07720166.3
(22) Anmeldetag: 29.05.2007
(51) Int. Cl.: G01B 5/30, E21F 17/18

(54) **VERFAHREN UND EINRICHTUNG ZUM ERMITTELN VON VERSCHIEBUNGEN UND/ODER DEFORMATIONEN IM UNTERTAGBAU**
METHOD AND DEVICE FOR DETERMINING DISPLACEMENTS AND/OR DEFORMATIONS IN UNDERGROUND WORKING
PROCÉDÉ ET DISPOSITIF POUR DÉTERMINER DES DÉPLACEMENT ET/OU DES DÉFORMATIONS DANS UNE CONSTRUCTION SOUTERRAINE

(30) Priorität: 31.05.2006 CH 875062006
(43) Veröffentlichungstag der Anmeldung: 18.03.2009
(73) Patentinhaber: Kovari, Kalman, 8053 Zürich (CH)
(72) Erfinder: Kovari, Kalman, 8053 Zürich (CH)
(74) Vertreter: Rutz & Partner
(86) Internationale Anmeldenummer: PCT/CH2007/000269
(87) Internationale Veröffentlichungsnummer: WO 2007/137442

(56) Entgegenhaltungen:
- DE-A1- 2 920 886
- US-A- 3 568 326
- INTERNET CITATION: 'Modular Extensometer', [Online] Solexperts A.G. Gefunden im Internet: <URL:http://www.solexperts.com/pdfs/de/geo_ mod_ext_de.pdf> [gefunden am 2010-06-08]

## Beschreibung

Die Erfindung betrifft ein Verfahren und eine Einrichtung zum Ermitteln von Verschiebungen und/oder Deformationen im einen im Untertagbau ausgebrochenen Hohlraum umgebenden Gebirge.

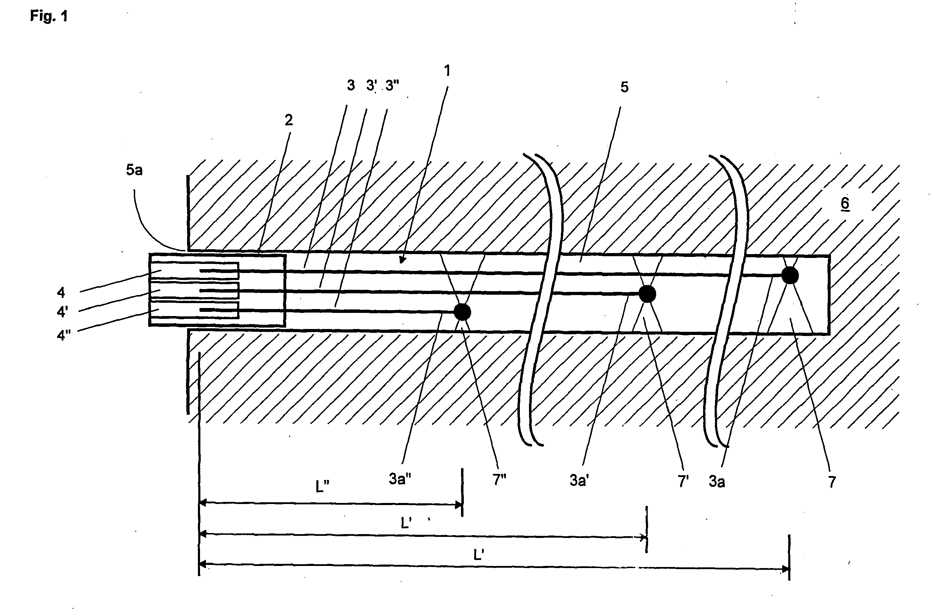

Die Fig. 1 zeigt eine herkömmliche Einrichtung zum Messen von Verschiebungen und Deformationen im Baugrund. Diese Einrichtung umfasst ein in der Fig. 1 nur schematisch dargestelltes Messinstrument 1 bekannter Bauart, das in der Fachwelt als "Extensometer" bezeichnet wird. In diesem Zusammenhang wird beispielhaft auf das unter der Bezeichnung "Modular Extensometer" von der Firma Solexperts AG in CH-8617 Mönchaltorf vertriebene Gerät hingewiesen. Das Messinstrument 1 besteht aus einem Messkopf 2 und mehreren stangenförmigen Messelementen (Messstangen) 3, 3', 3", die unterschiedliche Längen L, L' bzw. L" aufweisen, parallel zueinander verlaufen und sich in der gleichen Richtung vom Messkopf 1 weg erstrecken. Die Messelemente 3, 3', 3'' sind relativ zum Messkopf 2 verschiebbar. Im Messkopf 2 sind Bewegungssensoren 4, 4', 4'' untergebracht, von denen jeder einem Messelement 3, 3' bzw. 3'' zugeordnet ist und mittels derer die Verschiebung der Messelemente 3, 3', 3'' bezüglich des Messkopfes 2 gemessen werden. Beim gezeigten Ausführungsbeispiel sind die Bewegungssensoren 4, 4', 4'' elektrische Wegaufnehmer, die eine Fernmessung erlauben.

Das Messinstrument 1 ist so in ein Bohrloch 5 im zu überwachenden Baugrund 6 (Boden, Fels, etc.) eingesetzt, dass sich der Messkopf 2 innerhalb des Bohrlochs 5 im Bereich der Bohrlochmündung 5a befindet. Jedes Messelement 3, 3', 3'' ist an seinem Kopfteil (freies Ende) 3a, 3a', 3a'' fest, d.h. kraftschlüssig, mit dem Baugrund 6 verbunden, beispielsweise mittels Zementinjektionen. Die entsprechenden Verankerungsstellen sind in der Fig. 1 nur schematisch angedeutet und mit 7, 7', 7'' bezeichnet.

Veränderungen im Baugrund 6 haben Relativverschiebungen der Messelemente 3, 3', 3'' relativ zum Messkopf 2 zur Folge, die von den Bewegungssensoren 4, 4', 4'' erfasst werden. Die Signale der Bewegungssensoren 4, 4', 4'' werden dann auf an sich bekannte Weise ausgewertet.

Im Tunnelbau wird dieses bekannte Messinstrument gemäss Fig. 1 z.B. verwendet zur Messung von Verschiebungen im den Tunnelhohlraum umgebenden Gebirge in radialer Richtung, zur Messung von Verschiebungen der Tunnelsohle im quellfähigen Gebirge und zur Messung von Setzungen im den Tunnelhohlraum umgebenden Gelände. Dieses Gerät wird als der nächstliegende Stand der Technik betrachtet

Beim Ausbruch eines Tunnels ist es erwünscht oder gar notwendig, die Verschiebungen in Tunnellängsrichtung vor der Ortsbrust zu messen, vor allem beim Tunnelvortrieb in druckhaftem Gebirge. Zu diesem Zweck kann z.B. eine Messeinrichtung der in der DE-A-29 20 886 beschriebenen Art verwendet werden. Beim Einsatz einer solchen bekannten Messeinrichtung werden in einer von der Ortsbrust ausgehenden Bohrung im zu untersuchenden Gebirgsabschnitt in regelmässigen Abständen Messmarken, die durch mechanische Anschläge gebildet werden, angeordnet. Mittels eines für die Messungen in das Bohrloch eingeführten mobilen Messgerätes werden periodisch die Abstände zwischen jeweils benachbarten Messmarken gemessen und aus den gewonnen Messungen allfällige Verschiebungen ermittelt. Mit fortschreitendem Vortrieb wird die durch die Bohrung festgelegte Messlinie laufend verkürzt. Dabei geht zwar eine Messmarke nach der andern verloren, das Messgerät bleibt jedoch unbeschädigt.

Dieses Messverfahren hat den Nachteil, dass der Vortrieb während einer Messung für längere Zeit unterbrochen werden muss, da das aufeinander folgende Vorschieben und Zurückziehen des Messgerätes sehr zeitaufwändig ist. Falls in der unmittelbaren Nähe der Ortsbrust grössere Gebirgsbewegungen auftreten, so kann das zu einem Abknicken des Bohrloches führen, was ein Einführen des Messgerätes in das Bohrloch verunmöglicht.

In der US-A-3,568,326 ist eine Vorrichtung zum mechanischen Messen von Verschiebungen im einen Tunnel umgebenden Fels offenbart. Bei dieser Vorrichtung sind in einem Bohrloch, dass sich von der Tunnelwand seitlich in den Fels hinein erstreckt, mehrere Ankerelemente fix angeordnet, die in einem gegenseitigen Abstand über die Länge des Bohrloch verteilt sind. An jedem Ankerelement ist das eine Ende eines Drahtes befestigt, der am andern Ende mit einem zugeordneten mechanischen Messinstrument gekoppelt ist. Die Messinstrumente sind an der Mündung des Bohrlochs in den Tunnel angeordnet und somit vom Tunnel her zugänglich. Sobald im Fels eine Verschiebung oder eine Deformationen auftritt, hat das eine entsprechende Verschiebung mindestens eines der Drähte zur Folge. Jede Verschiebung eines Drahtes bewirkt eine entsprechende Anzeige am zugeordneten Messinstrument. Das Ablesen der Anzeige der Messinstrumente erfolgt vom Tunnel her.

Der vorliegenden Erfindung liegt nun die Aufgabe zugrunde, ein Verfahren bzw. eine Vorrichtung der eingangs genannten Art zu schaffen, das bzw. die es ermöglicht, die Verschiebungen und/oder Deformationen im Gebirge, das einen im Untertagbau ausgebrochenen Hohlraum umgibt, mit verhältnismässig einfachen Mitteln zuverlässig und rasch zu messen.

Diese Aufgabe wird erfindungsgemäss mit einem Verfahren mit den Merkmalen des Anspruches 1 bzw. einer Einrichtung mit den Merkmalen des Anspruches 5 gelöst.

Bevorzugte Weiterausgestaltungen des erfindungsgemässen Verfahrens bzw. der erfindungsgemässen Einrichtung bilden Gegenstand der abhängigen Ansprüche.

Nachfolgend wird die Erfindung unter Bezugnahme auf die Figuren näher erläutert. Es zeigt rein schematisch:
- Fig. 1: ein bekanntes Messgerät zur Messung von Deformationen und Verschiebungen im Gelände;
- Fig. 2: eine erste Ausführungsform einer erfindungsgemässe Einrichtung zum Ermitteln von beim Tunnelbau auftretenden Verschiebungen im Bereich der Ortsbrust;
- Fig. 3: das sukzessive Verkürzen der Einrichtung gemäss Fig. 2 bei fortschreitendem Tunnelvortrieb, d.h. bei fortschreitender Veränderung der Lage der Ortsbrust relativ zum Messkopf;
- Fig. 4: ein Diagramm, in dem die beim fortschreitenden Tunnelvortrieb gemäss Fig. 3 ermittelten Verschiebungen der einzelnen Messelemente relativ zum Messkopf dargestellt sind;
- Fig. 5: die in der Fig. 2 gezeigten Einrichtung in Seitenansicht,
- Fig. 6: einen Querschnitt durch den Messkopf der Einrichtung gemäss Fig. 5;
- Fig. 7: eine zweite Ausführungsform einer erfindungsgemässen Einrichtung zum Ermitteln von beim Tunnelbau auftretenden Verschiebungen im Bereich der Ortsbrust;
- Fig. 8: eine Anwendung der in Fig. 2 gezeigten erfindungsgemässen Einrichtung zur Ermittlung von Verschiebungen und/oder Deformationen in der einen ausgebrochenen Hohlraum umgebenden Wandung; und
- Fig. 9: eine Anwendung der in Fig. 2 gezeigten erfindungsgemässen Einrichtung zur Ermittlung von Verschiebungen und/oder Deformationen in der Tunnelsohle beim Teilausbruch eines Tunnels.

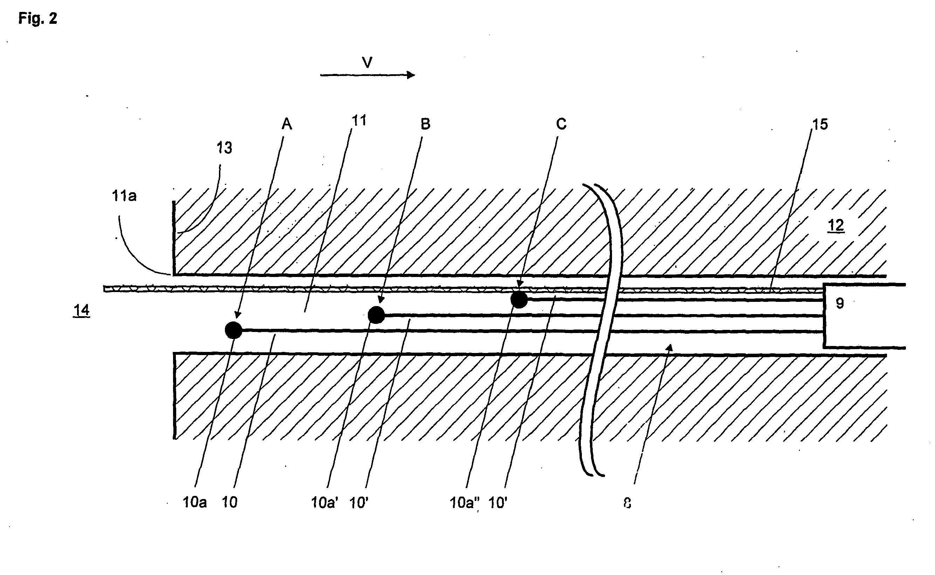

Anhand der Fig. 2 wird nun eine erfindungsgemässe Einrichtung zum Ermitteln von beim Tunnelvortrieb im Bereich der Ortsbrust auftretenden Verschiebungen beschrieben. Diese Einrichtung umfasst ein in Fig. 2 nur schematisch dargestelltes

Messinstrument, das aus einem Messkopf 9 und mehreren stangenförmigen Messelementen, beim gezeigten

Ausführungsbeispiel drei Messelementen 10, 10', 10'', besteht. Es können jedoch auch mehr als drei Messelemente 10 verwendet werden. Die unterschiedlich langen Messelemente 10, 10', 10'' erstrecken sich in gleicher Richtung vom Messkopf 9 weg, verlaufen parallel zueinander und sind relativ zum Messkopf 9 relativ verschiebbar. Jedes Messelement 10, 10', 10'' weist an seinem dem Messkopf 9 abgewandten, freien Ende einen Kopfteil 10a, 10a' bzw. 10a'' auf. Wegen der unterschiedlichen Längen der Messelemente 10, 10', 10'' sind die Kopfteile 10a, 10a', 10a'' verschieden weit vom Messkopf 9 entfernt. Im Messkopf 9 sind gleich wie beim Messinstrument 1 gemäss Fig. 1 Bewegungssensoren (in Fig. 2 nicht dargestellt) untergebracht, von denen jeder einem Messelement 10, 10', 10'' zugeordnet ist. Diese Bewegungssensoren sind vorzugsweise elektrische Wegaufnehmer und messen die Verschiebung der Messelement 10, 10', 10'' bzw. deren Kopfteile 10a, 10a', 10a'' bezüglich des Messkopfes 9. Im Messkopf 9 ist eine nicht dargestellte Datenerfassungseinheit untergebracht, in der die gemessenen, die Grösse der erfolgten Verschiebungen kennzeichnenden Daten erfasst und gespeichert werden. Schliesslich enthält der Messkopf 9 noch eine Stromversorgungseinheit und eine Sendeeinheit (nicht gezeigt).

Das Messinstrument 8 ist mit dem Messkopf 9 voraus in ein Bohrloch 11 (Messkanal) im Gebirge 12 eingesetzt, dass sich von der Ortsbrust 13 in Tunnelvortriebsrichtung V erstreckt. Das heisst, dass sich der Messkopf 9 entfernt von der Mündung 11a des Bohrloches 11 in den bereits ausgebrochenen Tunnelhohlraum 14 in der Bohrung 11 liegt. Die Kopfteile 10a, 10a', 10a'' der Messelemente 10, 10', 10'' werden auf in der Fig. 2 nicht dargestellte Weise kraftschlüssig mit dem umgebenden Gebirge 12 verbunden, z.B. durch Zementinjektionen, wie das bereits anhand der Fig. 1 erläutert wurde. Die im Gebirge 12 verankerten Kopfteile 10a, 10a', 10a'' legen Messpunkte A, B, C usw. fest.

Das Messinstrument 8 weist ferner ein Datenübertragungselement 15 auf, das zum Übertragen der im Messkopf 9, d.h. in der in diesem untergebrachten Datenerfassungseinheit gespeicherten Messdaten, aus dem Bohrloch 11 heraus dient. Dieses in der Fig. 2 rein schematisch dargestellte und mit der Sendeeinheit verbundene Datenübertragungselement 15 kann z.B. ein Signalkabel oder eine Sendeantenne sein.

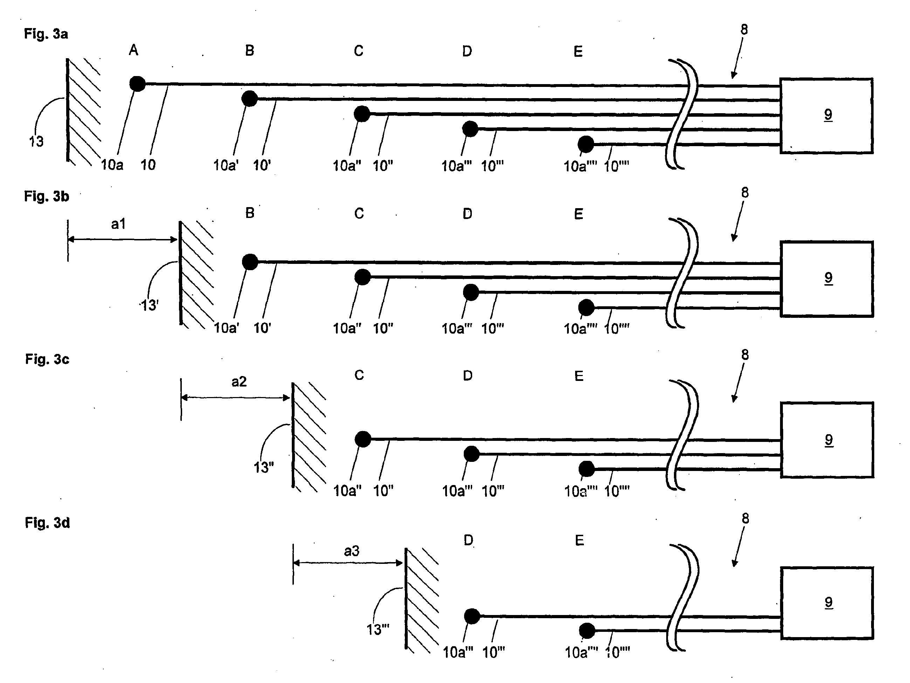

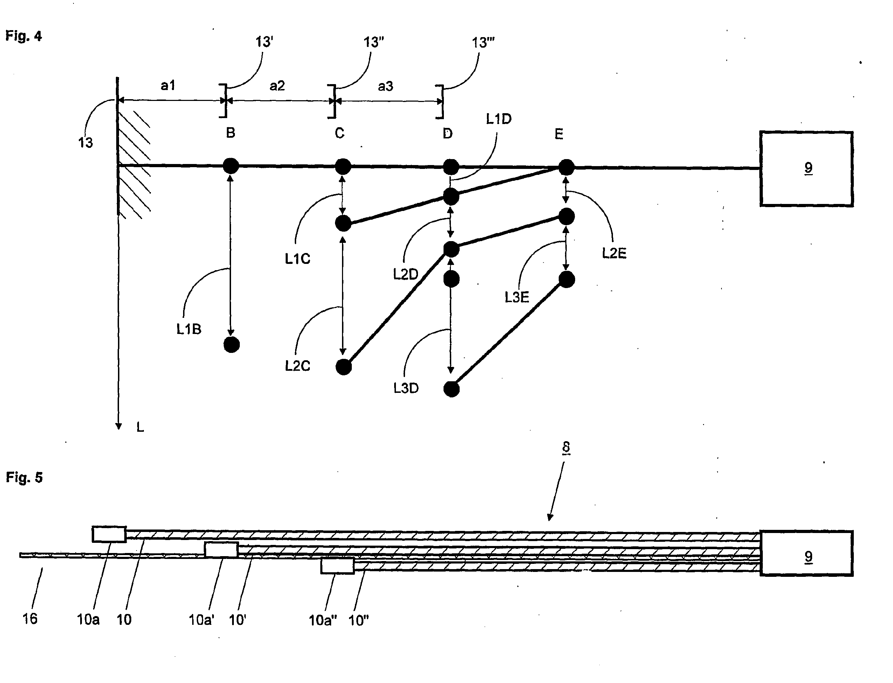

Beim Fortschreiten des Tunnelvortriebes werden die Kopfteile 10a, 10a', 10a'' der Messelemente 10, 10',10'' und damit die Messpunkte A, B, etc. nacheinander entfernt. Dabei werden die Messungen an den verbleibenden Messpunkten weitergeführt. Dies soll nachfolgend für ein Messinstrument 8 mit fünf Messelementen 10, 10', 10'', 10''', 10'''' und fünf Messpunkten A-E anhand der Fig. 3 (Fig. 3a)-3d)) in Verbindung mit der Fig. 4 näher erläutert werden.

In der Fig. 3a) ist gleich wie in der Fig. 2 gezeigt der Zustand nach der Installation des Messinstrumentes 8 dargestellt. Die Fig. 3b) zeigt den Zustand nach einem Vortrieb um die Strecke a1. Die Ortsbrust befindet sich nun an der mit 13' bezeichneten Stelle und der vordere Teil des Messelementes 10 mit dem Kopfteil 10a und damit der Messpunkt A ist bereits abgetrennt worden. Die verbleibenden Messpunkte können nun eine Verschiebung relativ zum Messkopf in Richtung Ortsbrust 13' erfahren, die von den Bewegungssensoren im Messkopf 9 erfasst werden. Im Diagramm der Fig. 4, bei dem auf der vertikalen Achse die Grösse der Verschiebung aufgetragen ist, sind diese möglichen Verschiebungen mit L1B, L1C und L1D bezeichnet.

Beim nächsten Vortrieb um die Strecke a2 wird der vordere Teil des Messelementes 10' mit dem Kopfteil 10a' und damit der Messpunkt B abgetrennt (Fig. 3c)). Die Lage der Ortsbrust ist mit 13'' bezeichnet. Die bei diesem Vortriebsschritt auftretenden Verschiebungen der Messpunkte C, D, E relativ zum Messkopf 9 sind in der Fig. 4 mit L2C, L2D und L2E bezeichnet. Entsprechend wird beim nachfolgenden Vortrieb um die Strecke a3 der vordere Teil des Messelementes 10'' mit dem Kopfteil 10a'' und damit der Messpunkt C abgetrennt (Fig. 3d)). Die Ortsbrust befindet sich nun an der mit 13''' bezeichneten Stelle. Die verbleibenden Messpunkte D, E erfahren eine weitere Verschiebung relativ zum Messkopf 9 um die Strecken L3D bzw. L3E (Fig.4).

Die ermittelten Verschiebungen L1B, L1C, L1D; L2C, L2D, L2E; L3D, L3E werden in der Datenerfassungseinheit im Messkopf 9 erfasst und gespeichert und können über das Datenübertragungselement 15 abgerufen werden.

In den Fig. 5 (Seitenansicht) und 6 (Schnitt durch den Messkopf) ist der Aufbau des erfindungsgemässen, in den Fig. 2 und 3 nur schematisch gezeigten Messinstruments 8 etwas detaillierter dargestellt.

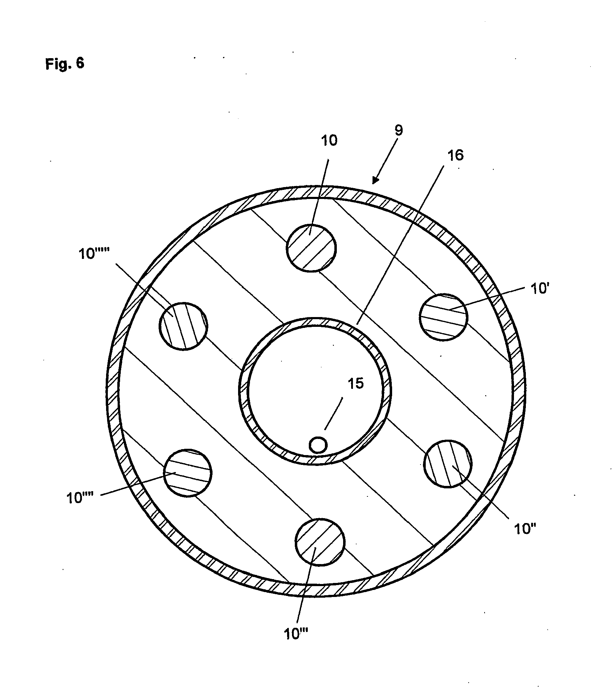

Das Messinstrument 8 gemäss den Fig. 5 und 6 weist sechs Messelemente 10-10''''' auf, von denen in der Fig. 5 nur drei Messelemente 10, 10', 10'' mit ihren Kopfteilen 10a, 10a', 10a'' gezeigt sind. Die Messelemente 10-10''''' sind von einem in den Fig. 5 und 6 nicht näher dargestellten Hüllrohr umgeben. Vom Messkopf 9 weg führt ein zentrales Rohr 16, das parallel zu den Messelementen 10-10''''' verläuft. Im Innern dieses Rohres 16 ist das Datenübertragungselement 15 (Fig. 6) angeordnet, das beim gezeigten Ausführungsbeispiel eine Sendeantenne zum drahtlosen Übermitteln der in der nicht gezeigten Datenerfassungseinheit gespeicherten Messdaten ist.

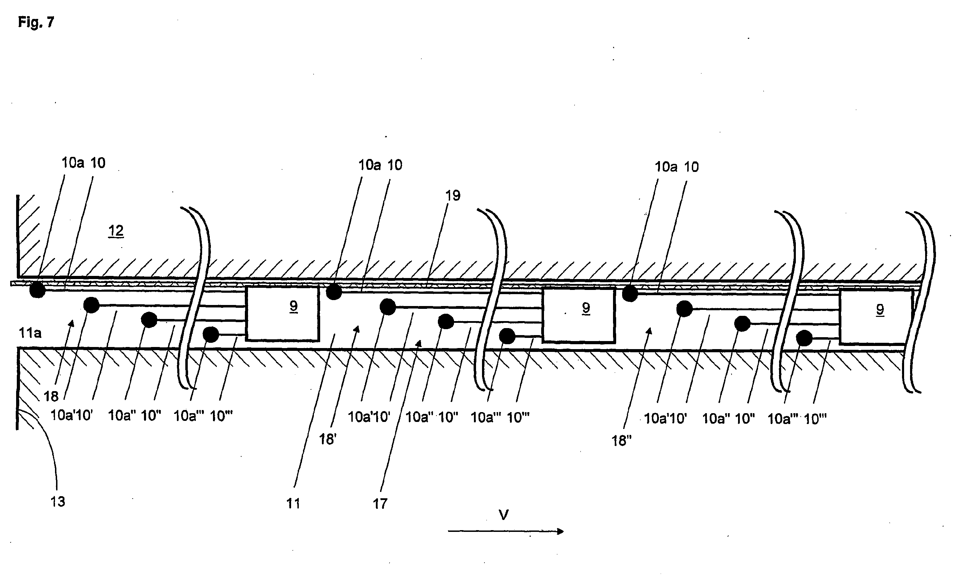

In der Fig. 7 ist eine zweite Ausführungsform einer erfindungsgemässen Einrichtung zum Ermitteln von beim Tunnelbau auftretenden Verschiebungen im Bereich der Ortsbrust gezeigt, zu der eine Messanordnung 17 gehört, die aus mehreren Messinstrumenten 18, 18', 18" besteht. Die Messinstrument 18, 18', 18'' sind hintereinander in das Bohrloch 11 im Gebirge 12, das sich von der Ortsbrust 13 in Vortriebsrichtung V erstreckt, eingesetzt. Dabei entspricht jedes Messinstrument 18, 18', 18'' dem in den Fig. 2, 3, 5 und 6 gezeigten Messinstrument 8 und umfasst dementsprechend einen Messkopf 9 und eine Anzahl von unterschiedlich langen Messelementen 10, 10', 10'', 10'''. Die Messköpfe 9 der Messinstrumente 18, 18', 18'' sind über ein Datenübertragungselement 19, z.B. ein Signalkabel oder eine Sendeantenne, miteinander verbunden.

Die Messköpfe 9 der Messinstrumente 18, 18', 18'' sind mit dem das Bohrloch 11 umgebenden Gebirge 12 kraftschlüssig verbunden, z.B. mittels Zementinjektion. Der Kopfteil 10a des längsten Messelementes 10 der Messinstrumente 18', 18'' ist jeweils mit dem Messkopf 9 des angrenzenden Messinstrumentes 18 bzw. 18'' fest verbunden. Die Kopfteile 10a', 10a'' und 10a''' der übrigen Messelemente 10', 10'', 10''' sind fest mit dem umgebenden Gebirge 12 verbunden, wie das anhand der Fig. 2 bereits erläutert wurde.

Beim Vortrieb des Tunnels werden die Messelemente 10, 10', 10'', 10''' und auch die Messköpfe 9 schrittweise entfernt, entsprechend der anhand der Fig. 3 beschriebenen Vorgehensweise.

Bei den anhand der Fig. 2, 3, 5-7 beschriebenen Messinstrumenten 8 müssen besondere konstruktive Massnahmen getroffen werden, um den folgenden speziellen Erfordernissen gerecht zu werden:

Da anders als an der Bohrlochmündung 11a in der Tiefe des Bohrloches 11 oft ein hoher Wasserdruck im Baugrund (Fels oder Boden), der sog. Porenwasserdruck, herrscht, müssen die Messköpfe 9 gegen diesen Wasserdruck abgedichtet sein. Trotz dieses Wasserdruckes muss die Beweglichkeit der Messelement 10, 10', 10'' etc. relativ zum Messkopf 9 gewährleistet sein.

Beim Materialabbau an der Ortsbrust 13 während des Tunnelvortriebs durch Abbaugeräte oder Sprengen können die nächstgelegenen Messelemente 10 und das zentrale Rohr 16 angerissen oder erschüttert werden. Dadurch darf die Funktion des Messkopfs 9 jedoch nicht beeinträchtigt werden. Ist das Datenübertragungselement 15 bzw. 19 ein Signalkabel, so darf sein fortschreitendes Verkürzen während des Tunnelvortriebs die Datenverarbeitung im Messkopf 9 nicht negativ beeinflussen.

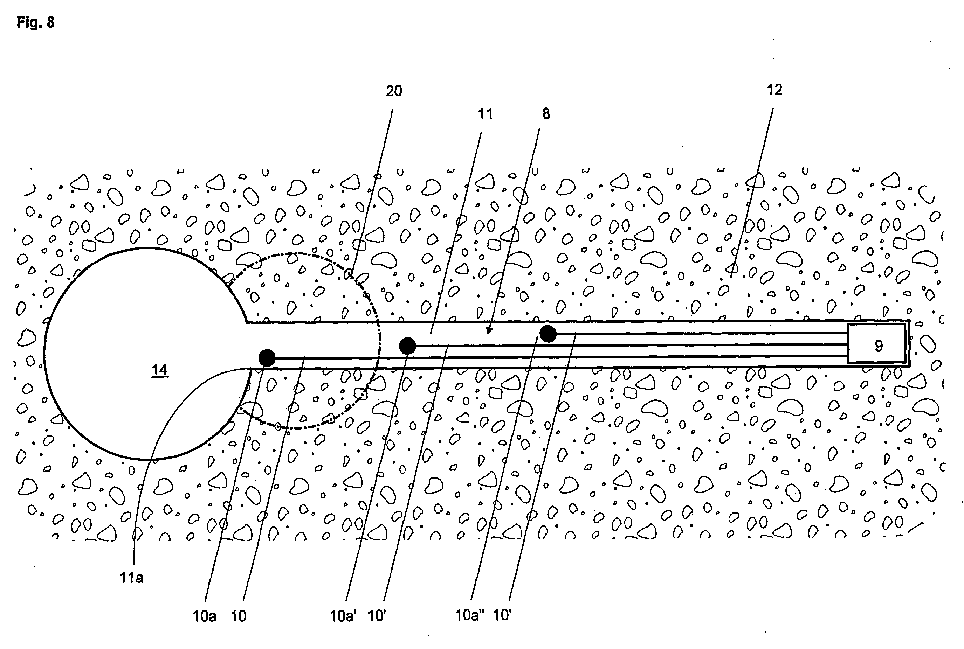

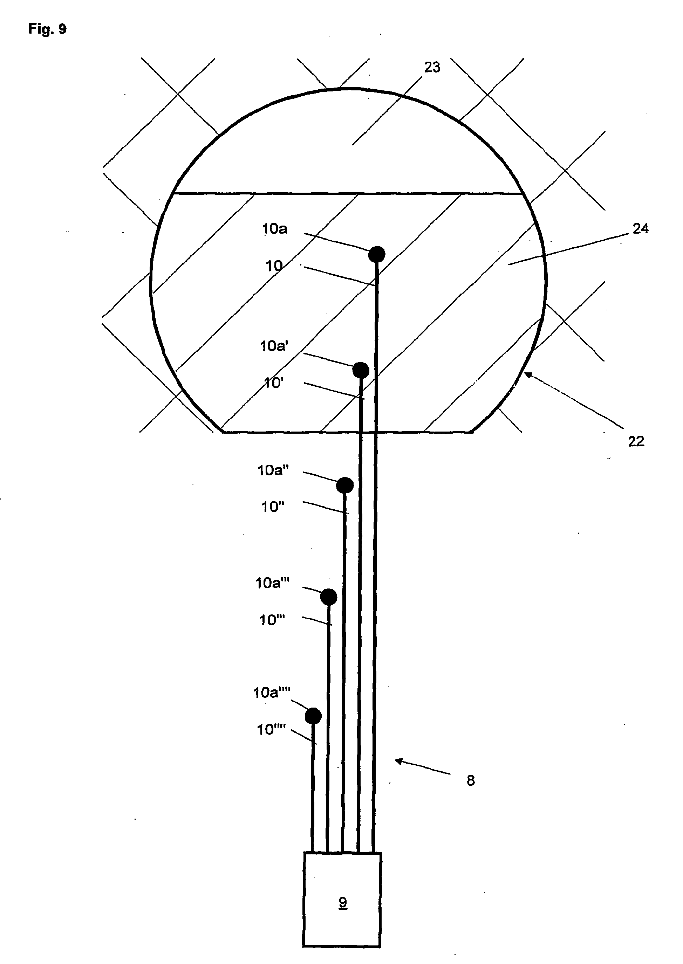

Anhand der Fig. 2-4 wurde der Einsatz einer erfindungsgemässen Einrichtung zum Ermitteln von Verschiebungen, die beim Tunnelvortrieb vor der Ortsbrust auftreten, erläutert. Es ist jedoch möglich, das erfindungsgemässe Konzept auch für die Messung von anderswo in einem Tunnel auftretenden Verschiebungen anzuwenden. Derartige weiteren Anwendungsmöglichkeiten werden nun anhand der Fig. 8 und 9 beschrieben.

Die Fig. 8 zeigt eine Anwendung des erfindungsgemässen Konzepts für die Messung von Verschiebungen in druckhaftem Gebirge. Das Messinstrument 8 ist so in eine Bohrung 11 im den Tunnelhohlraum 14 umgebenden Gebirge 12 eingesetzt, dass der Messkopf 9 in der Tiefe des Bohrlochs 11 liegt. Da druckhaftes Gebirge vorliegt lockert sich das Gebirge im mit 20 bezeichneten Bereich der Bohrlochmündung 11a auf und es finden dementsprechend grosse Verschiebungen statt. Der von diesem Bereich 20 weit entfernte Messkopf 9 ist dabei gut geschützt, dies im Gegensatz zum herkömmlichen Einbau gemäss Fig. 1, bei dem der Messkopf im Bereich der Bohrlochmündung liegt.

In der Fig. 9 ist eine Anwendung des erfindungsgemässen Konzepts für die Messung von Verschiebungen in quellfähigem Gebirge gezeigt. In quellfähigem Gebirge hebt sich die Sohle 21 des in Fig. 9 nur schematisch dargestellten Tunnels 22. Beim Teilausbruch des Tunnels 22 wird zuerst die obere Tunnelhälfte 23, die sog. Kalotte, ausgebrochen und erst später die untere Tunnelhälfte 24. Zur Bestimmung der beim Heben der Tunnelsohle 21 in der untern Tunnelhälfte 24 auftretenden Verschiebungen ist das Messinstrument 8 so in eine nicht gezeigte vertikale Bohrung eingesetzt, dass der Messkopf 9 in der Tiefe des Bohrloches liegt. Beim Ausbrechen der untern Tunnelhälfte 24 werden die Kopfteile 10a und 10a' der Messelemente 10, 10' entfernt.

## Patentansprüche

1. Verfahren zum Ermitteln von Verschiebungen und/oder Deformationen im einen im Untertagbau ausgebrochenen Hohlraum (14) umgebenden Gebirge (12) unter Verwendung eines Messgerätes (8), das einen Messkopf (9) und mehrere längliche Messelemente (10, 10',...) aufweist, die relativ zum Messkopf (9) verschiebbar sind, unterschiedliche Längen aufweisen und sich in der gleichen Richtung vom Messkopf (9) weg erstrecken, **gekennzeichnet durch** die folgenden Schritte:
Einsetzen des Messgerätes (8) in ein sich vom ausgebrochenen Hohlraum (14) ins umgebende Gebirge (12) erstreckendes Bohrloch (11) mit dem Messkopf (9) voraus, so dass der Messkopf (9) entfernt von der Mündung (11a) des Bohrloches (11) in den Hohlraum (14) liegt, und
Verankern des Messkopfes (9) und der vom Messkopf (9) entfernt liegenden Kopfteile (10a, 10a',...) der Messelemente (10, 10',...) im Bohrloch (11), so dass der Messkopf (9) und die Kopfteile (10a, 10a',...) der Messelemente (10, 10',...) mit dem umgebenden Gebirge (12) fest verbunden sind.

2. Verfahren nach Anspruch 1 zum Ermitteln von beim Tunnelbau im Bereich der Ortsbrust (13) auftretenden Verschiebungen und/oder Deformationen.

3. Verfahren nach Anspruch 2, **dadurch gekennzeichnet, dass** das Messgerät (8) mit dem Messkopf (9) voraus in ein sich von der Ortsbrust (13) in Vortriebsrichtung (V) erstreckendes Bohrloch (11) eingesetzt wird und dass bei fortschreitendem Tunnelvortrieb nacheinander die Kopfteile (10a, 10a',...) der sich in Vortriebsrichtung (V) erstreckenden Messelemente (10, 10', ...) entfernt werden.

4. Verfahren nach einem der Ansprüche 1 - 3, **dadurch gekennzeichnet, dass** die Messdaten vom Messkopf (9) durch das Bohrloch (11) hinaus geführt werden.

5. Einrichtung zum Ermitteln von Verschiebungen und/oder Deformationen im einen im Untertagbau ausgebrochenen Hohlraum (14) umgebenden Gebirge (12), **gekennzeichnet durch** ein Messinstrument (8), das einen Messkopf (9) und mehrere längliche Messelemente (10, 10',...) aufweist, die relativ zum Messkopf (9) verschiebbar sind, unterschiedliche Längen aufweisen und sich in der gleichen Richtung vom Messkopf (9) weg erstrecken, und das in ein sich vom ausgebrochenen Hohlraum (14) ins umgebende Gebirge (12) erstreckendes Bohrloch (11) mit dem Messkopf (9) voraus eingesetzt ist, so dass der Messkopf (9) entfernt von der Mündung (11a) des Bohrlochs (11) in den Hohlraum (14) liegt, wobei der Messkopf (9) und die vom Messkopf (9) entfernt liegenden Kopfteile (10a, 10a',...) der Messelemente (10, 10',...) im Bohrloch (11) verankert sind, so dass der Messkopf (9) und die Kopfteile (10a, 10a',...) der Messelemente (10, 10',...) mit dem umgebenden Gebirge (12) fest verbunden sind.

6. Einrichtung nach Anspruch 5 zum Ermitteln von beim Tunnelbau im Bereich der Ortsbrust (13) auftretenden Verschiebungen und/oder Deformationen.

7. Einrichtung nach Anspruch 6, **dadurch gekennzeichnet, dass** das Messgerät (8) mit dem Messkopf (9) voraus in ein sich von der Ortsbrust (13) in Vortriebsrichtung (V) erstreckendes Bohrloch (11) eingesetzt ist, wobei bei fortschreitendem Tunnelvortrieb nacheinander die Kopfteile (10a, 10a',...) der sich in Vortriebsrichtung (V) erstreckenden Messelemente (10, 10', ...) entfernt werden.

8. Einrichtung nach einem der Ansprüche 5 - 7, **dadurch gekennzeichnet, dass** im Bohrloch (11) ein mit dem Messkopf (9) verbundenes Datenübertragungselement (15, 19), vorzugsweise eine Sendeantenne, verläuft, das zum Übertragen von Messdaten vom Messkopf zur Mündung (11a) des Bohrloches (11) dient.

9. Einrichtung nach Anspruch 8, **dadurch gekennzeichnet, dass** das Datenübertragungselement (15) in einem Rohr (16) verläuft, das sich vom Messkopf (9) weg parallel zu den Messelementen (10', 10',...) erstreckt.

10. Einrichtung nach einem der Ansprüche 5 - 9, **dadurch gekennzeichnet, dass** im Messkopf (9) eine Datenerfassungseinheit zur Erfassung und Speicherung der ermittelten Daten untergebracht ist.

11. Einrichtung nach einem der Ansprüche 5 -10, **dadurch gekennzeichnet, dass** sich im Bohrloch (11) eine Messanordnung (17) befindet, die aus mindestens zwei miteinander gekoppelten Messinstrumenten (18, 18',...) besteht, die in Längsrichtung des Bohrloches hintereinander angeordnet und mit dem Messkopf (9) von der Mündung (11a) des Bohrloches (11) entfernt in das Bohrloch (11) eingesetzt sind.

12. Messanordnung zur Durchführung des Verfahrens nach Anspruch 1, mit wenigstens einem Messinstrument (8, 18), das einen Messkopf (9) und mehrere längliche Messelemente (10, 10',...) aufweist, die relativ zum Messkopf (9) verschiebbar sind, unterschiedliche Längen aufweisen und sich in der gleichen Richtung vom Messkopf (9) weg erstrecken, **dadurch gekennzeichnet, dass** das Messinstrument (8, 18) dazu ausgebildet ist, mit dem Messkopf (9) von der Mündung (11a) eines Bohrloches (11) entfernt in das Bohrloch (11) eingesetzt zu werden, dass im Messkopf (9) eine Datenerfassungseinheit zur Erfassung und Speicherung der ermittelten Daten untergebracht ist und dass ein mit dem Messkopf (9) verbundenes Datenübertragungselement (15, 19) vorgesehen ist, das zum Übertragen von Messdaten vom Messkopf zur Mündung (11a) des Bohrloches (11) dient.

13. Messanordnung nach Anspruch 12, **dadurch gekennzeichnet, dass** das Datenübertragungselement (15, 19) eine Sendeantenne ist.

14. Messanordnung nach Anspruch 12, **dadurch gekennzeichnet, dass** das Datenübertragungselement (15) in einem Rohr (16) verläuft, das sich vom Messkopf (9) weg parallel zu den Messelementen (10', 10',...) erstreckt.

## Claims

1. Method for determining displacements and/or deformations in a mountain formation (12) surrounding a cavity (14), which has been excavated in mining, using a measuring device (8) that comprises a measuring head (9) and a plurality of elongated measuring elements (10, 10 ',...), which are slidable relative to the measuring head (9), exhibit different lengths and extend in the same direction away from the measuring head (9), **characterised by** the following steps:
insertion of the measuring device (8) with the measuring head (9) in front into a borehole (11) that is extending from the excavated cavity (14) into the surrounding mountain formation (12), so that the measuring head (9) lies remote from the aperture (11a) of the borehole (11) in the cavity (14); and
anchorage of the measuring head (9) and of the remote from the measuring head (9) located head portions (10a, 10a',...) of the elements (10, 10 ',...) within the borehole (11), so that the measuring head (9) and the head portions (10a, 10a',...) of the measuring elements (10, 10 ,...) are firmly connected to the surrounding mountain formation (12).

2. Method according to claim 1 for determining displacements and/or deformations occurring during tunnel construction in the range of the working face (13).

3. Method according to claim 2, **characterised in that** the measuring device (8) with the measuring head (9) in front is inserted into a borehole (11), that is extending from the working face (13) in driving direction (V), and that with advancing tunnel driving the head portions (10a, 10a' ,...) of the measuring elements (10, 10 ',...) extending in driving direction (V) are successively removed.

4. Method according to one of claims 1 - 3, **characterised in that** the measurement data are guided from the measuring head (9) through the borehole (11) to the outside.

5. Device for determining displacements and/or deformations in a mountain formation (12) surrounding a cavity (14), which has been excavated in mining, **characterised by** a measuring device (8) that comprises a measuring head (9) and a plurality of elongated measuring elements (10, 10 ',...), which are slidable relative to the measuring head (9), exhibit different lengths and extend in the same direction away from the measuring head (9), and that is inserted with the measuring head (9) in front into a borehole (11) that is extending from the excavated cavity (14) into the surrounding mountain formation (12), so that the measuring head (9) lies remote from the aperture (11a) of the borehole (11) in the cavity (14); whereas the measuring head (9) and the remote from the measuring head (9) located head portions (10a, 10a',...) of the elements (10, 10 ',...) are anchored, so that the measuring head (9) and the head portions (10a, 10a',...) of the measuring elements (10, 10 ',...) are firmly connected to the surrounding mountain formation (12).

6. Device according to claim 5 for determining displacements and/or deformations occurring during tunnel construction in the range of the working face (13).

7. Device according to claim 6, **characterised in that** the measuring device (8) with the measuring head (9) in front is inserted into a borehole (11), that is extending from the working face (13) in driving direction (V), wherein with advancing tunnel driving the head portions (10a, 10a',...) of the measuring elements (10, 10 ',...) extending in driving direction (V) are successively removed.

8. Device according to one of the claims 5 - 7, **characterised in that** a data transfer element (15, 19), preferably a transmitting antenna, is extending in the borehole (11), which is connected to the measuring head (9) and which serves for transmitting measurement data from the measuring head (9) to the aperture (11a) of the borehole (11).

9. Device according to claim 8, **characterised in that** the data transfer element (15) is extending within a tube (16), that is extending in parallel to the measuring elements (10 ', 10 ',...) away from the measuring head (9).

10. Device according to one of the claims 5 - 9, **characterised in that** a data acquisition unit is accommodated in the measuring head (9), which serves for detection and storage of the determined data.

11. Device according to one of the claims 5 - 10, **characterised in that** a measuring arrangement (17) is arranged in the borehole (11), which consists of at least two measuring instruments (18, 18 ',...), which are coupled with one another, which are arranged behind one another in longitudinal direction of the borehole and which are inserted together with the measuring head (9) remote from the aperture (11a) of the borehole (11) into the borehole (11).

12. Measuring arrangement for carrying out the method according to claim 1, with at least one measuring device (8, 18), that comprises a measuring head (9) and a of elongated measuring elements (10, 10 ',...), which are slidable relative to the measuring head (9), exhibit different lengths and extend in the same direction away from the measuring head (9), **characterised in that** the measuring device (8, 18) is designed to be inserted into a borehole (11) with the measuring head (9) lying remote from the aperture (11a) of the borehole (11), that a data acquisition unit is accommodated in the measuring head (9), which serves for detection and storage of the determined data, and that a data transfer element (15, 19) is provided, which is connected to the measuring head (9) and which serves for the transmission of measurement data from the measuring head to the aperture (11a) of the borehole.

13. Measuring arrangement according to claim 12, **characterised in that** the data transfer element (15, 19) is a transmitting antenna.

14. Measuring arrangement according to claim 12, **characterised in that** the data transfer element (15) is extending within a tube (16), that is extending in parallel to the measuring elements (10', 10',...) away from the measuring head (9).

## Revendications

1. Procédé pour la détermination de déplacements et/ou de déformations dans un massif montagneux (12) entourant une cavité (14) excavée dans la construction souterraine, en utilisant un appareil de mesure (8) qui présente une tête de mesure (9) et plusieurs éléments de mesure longitudinaux (10, 10',...) qui sont mobiles par rapport à la tête de mesure (9), présentent des longueurs différentes et s'étendent dans la même direction en s'éloignant de la tête de mesure (9), **caractérisé en ce que** par les étapes suivantes :
insertion de l'appareil de mesure (8) dans un trou de forage (11) s'étendant depuis la cavité excavée (14) dans le massif montagneux environnant (12) avec la tête de mesure (9) en avant, de sorte que la tête de mesure (9) se trouve éloignée de l'embouchure (11a) du trou de forage (11) dans la cavité (14), et
ancrage de la tête de mesure (9) et des parties de tête (10a, 10a',...) des élément de mesure (10, 10',...), éloignées de la tête de mesure (9), dans le trou de forage (11), de sorte que la tête de mesure (9) et les parties de tête (10a, 10a',....) des éléments de mesure (10, 10',...) sont reliées fixement au massif montagneux environnant (12).

2. Procédé selon la revendication 1 pour la détermination de déplacements et/ou de déformations survenant pendant la construction du tunnel dans la zone du front de taille (13).

3. Procédé selon la revendication 2, **caractérisé en ce que** l'appareil de mesure (8) est inséré avec la tête de mesure en avant (9) dans un trou de forage (11) s'étendant depuis le front de taille (13) dans le sens d'avancement (V) et **en ce que** lors de l'avancement du tunnel en progression, les parties de tête (10a, 10a',....) des éléments de mesure (10, 10',...) s'étendant dans la direction d'avancement (V) sont retirées les unes après les autres.

4. Procédé selon l'une des revendications 1 à 3, **caractérisé en ce que** les données de mesure sont guidées vers la sortie à travers le trou de forage (11) par la tête de mesure (9).

5. Dispositif pour la détermination de déplacements et/ou de déformations dans un massif montagneux (12) entourant une cavité (14) excavée dans la construction souterraine, **caractérisé par** un instrument de mesure (8) qui présente une tête de mesure (9) et plusieurs éléments de mesure longitudinaux (10, 10',...) qui sont mobiles par rapport à la tête de mesure (9), présentent des longueurs différentes et s'étendent dans la même direction en s'éloignant de la tête de mesure (9) et instrument qui est inséré dans un trou de forage (11) s'étendant depuis la cavité excavée (14) dans le massif montagneux environnant (12) avec la tête de mesure (9) en avant de sorte que la tête de mesure (9) se trouve éloignée de l'embouchure (11a) du trou de forage (11) dans la cavité (14), la tête de mesure (9) et les parties de tête (10a, 10a',....) des élément de mesure (10, 10',...), éloignées de la tête de mesure (9), étant ancrées dans le trou de forage (11), de sorte que la tête de mesure (9) et les parties de tête (10a, 10a',....) des éléments de mesure (10, 10',...) sont reliées fixement au massif montagneux environnant (12).

6. Dispositif selon la revendication 5 pour la détermination de déplacements et/ou de déformations survenant pendant la construction du tunnel dans la zone du front de taille (13).

7. Dispositif selon la revendication 6, **caractérisé en ce que** l'appareil de mesure (8) est inséré avec la tête de mesure en avant (9) dans un trou de forage (11) s'étendant depuis le front de taille (13) dans le sens d'avancement (V) et **en ce que** lors de l'avancement du tunnel en progression, les parties de tête (10a, 10a',..) des éléments de mesure (10, 10',...) s'étendant dans la direction d'avancement (V) sont retirées les unes après les autres.

8. Dispositif selon l'une des revendications 5 à 7, **caractérisé en ce que** dans le trou de forage (11) s'étend un élément de transmission de données (15, 19), de préférence une antenne émettrice, relié à la tête de mesure (9), qui sert au transfert de données de mesure de la tête de mesure à l'embouchure (11a) du trou de forage (11).

9. Dispositif selon la revendication 8, **caractérisé en ce que** l'élément de transfert de données (15) s'étend dans un tube (16) qui s'étend en s'éloignant de la tête de mesure (9) parallèlement aux éléments de mesure (10, 10',...).

10. Dispositif selon l'une des revendications 5 à 9, **caractérisé en ce qu'**il est logé dans la tête de mesure (9) une unité de saisie de données pour la saisie et le stockage des données déterminées.

11. Dispositif selon l'une des revendications 5 à 10, **caractérisé en ce qu'**il se trouve dans le trou de forage (11) un dispositif de mesure (17) qui se compose au moins de deux instruments de mesure accouplés entre eux (18, 18',...) qui sont disposés dans le sens longitudinal du trou de forage les uns derrière les autres et sont insérés avec la tête de mesure (9) dans le trou de forage (11) éloigné de l'embouchure (11a) du trou de forage (11).

12. Dispositif de mesure pour la mise en oeuvre du procédé selon la revendication 1, avec au moins un instrument de mesure (8, 18) qui présente une tête de mesure (9) et plusieurs éléments de mesure longitudinaux (10, 10',...) qui sont coulissants par rapport à la tête de mesure (9), présentent différentes longueurs et s'étendent dans la même direction en s'éloignant de la tête de mesure (9), **caractérisé en ce que** l'instrument de mesure (8, 18) est réalisé de manière à être inséré éloigné de l'embouchure (11a) d'un trou de forage (11), avec la tête de mesure (9), dans le trou de forage (11), **en ce que** dans la tête de mesure (9), il est logé une unité de saisie de donnée pour la saisie et le stockage des données déterminées et **en ce qu'**il est prévu un élément de transfert de données (15, 19) relié à la tête de mesure (9), élément qui sert au transfert de données de mesure entre la tête de mesure et l'embouchure (11a) du trou de forage (11).

13. Dispositif de mesure selon la revendication 12, **caractérisé en ce que** l'élément de transfert de données (15, 19) est une antenne émettrice.

14. Dispositif de mesure selon la revendication 12, **caractérisé en ce que** l'élément de transfert de données (15) s'étend dans un tube (16) qui s'étend parallèlement aux éléments de mesure (10, 10',...) en s'éloignant de la tête de mesure (9).
